# FASCICULE DE BREVET EUROPEEN

(11) **EP 3 209 438 B1**
(45) Date de publication et mention de la délivrance du brevet: **11.02.2026**
(21) Numéro de dépôt: 15790482.2
(22) Date de dépôt: 21.10.2015
(51) Int. Cl.: B09C 1/06, F22B 1/00, F22B 1/28, F22B 3/00

(54) **SYSTÈME, PROCÉDÉ ET UTILISATION POUR LE TRAITEMENT DES MATÉRIAUX POREUX ET UTILISATION**
VORRICHTUNG, VERFAHREN UND VERWENDUNG ZUR BEHANDLUNG VON PORÖSEM MATERIAL UND VERWENDUNG
SYSTEM, METHOD AND USE FOR TREATING POROUS MATERIALS AND USE

(30) Priorité: 21.10.2014 BE 201400781
(43) Date de publication de la demande: 30.08.2017
(73) Titulaire: Soil Research Lab Sprl, 1410 Waterloo (BE)
(72) Inventeur: HAEMERS, Jan, B-1000 Brussels (BE); SAADAOUI, Hatem, B-1190 Brussels (BE)
(74) Mandataire: Brantsandpatents bv
(86) Numéro de dépôt international: PCT/EP2015/074347
(87) Numéro de publication internationale: WO 2016/062757

(56) Documents cités:
- EP-A1- 0 379 743
- EP-A2- 0 548 766
- GB-A- 2 098 644
- JP-A- H01 139 901
- US-A- 4 694 907
- US-A- 5 765 964

## Description

La présente invention concerne un système, un appareil et un procédé de traitement thermique des matériaux poreux et/ou des nappes aquifères. L'invention peut être utilisée pour le traitement des sols, des nappes aquifères, des nappes phréatiques et de tout matériau contaminé par des composés volatils et semi volatils.

### Art antérieur

La contamination des matériaux poreux tel que les sols est un sujet de grande préoccupation. Les sols peuvent être contaminés par des contaminants chimiques, biologiques et/ou radioactifs. La décontamination de ces sols est un essentielle pour préserver l'environnement et la santé publique.

Les sols peuvent êtres décontaminés par désorption thermique qui consiste en la dégradation des contaminants par l'effet de l'augmentation de la température du sol à traiter. La désorption thermique est applicable in-situ par l'injection de chaleur dans les sols ou ex-situ et donc sur des sols excavés. La désorption thermique permet d'extraire les contaminants volatiles et semi-volatiles. Une méthode particulière de désorption thermique in-situ fait recours à l'injection sous pression de la vapeur d'eau dans le sol à traiter, chauffer le sol et aspirer les vapeurs des contaminants hors du sol traité.

Les systèmes et procédés in-situ de décontamination des sols par injection de vapeur ont été décrits dans l'art antérieur. Ces systèmes et procédés utilisent des grandes quantités d'énergie pour le processus de chauffage. Une partie importante de cette énergie est perdue pour le transport de vapeur vers ou depuis le sol. Les contaminants vaporisés parcourent de longues distances à travers des matériaux non isolé thermiquement pour arriver à une installation de traitement. D'un point de vue énergétique, ces procédés sont coûteux et non respectueux de l'environnement.

L'installation de ces systèmes est compliquée due à l'utilisation d'éléments, par exemple tuyaux et tubes, assez grand, volumineux et conçus pour des pressions et des températures élevées. Le processus de décontamination utilisant les systèmes de l'art antérieur est assez long et très couteux.

US 5 765 964 montre un système exemplaire pour la décontamination des sols, utilisant un puits de chauffage et un puits d'extraction dans un matériau poreux. EP 2 632 616 également montre un système exemplaire pour la décontamination des sols.

EP 0 548 766 décrit un système de dépollution des sols utilisant des sondes d'injection et d'extraction amovibles pour appliquer de la vapeur sous haute pression et une extraction sous vide élevé. US 4 694 907 décrit un procédé de récupération assistée du pétrole dans des réservoirs profonds, combinant l'injection d'eau chaude pressurisée et la génération de vapeur in situ par des résistances électriques. JP H01 139901 décrit un générateur de vapeur compact et à débit fixe, conçu pour les environnements à ressources limitées.

Par conséquent, il y a besoin pour réduire la perte d'énergie, le temps et le coût du procédé de décontamination des sols par injection de vapeur. La présente invention vise à fournir une solution à au moins l'un des problèmes mentionnés ci-dessus. L'invention fournit des procédés et des systèmes pour la décontamination des sols permettant des économies d'énergie, de temps et d'argent. En outre, la présente invention vise à fournir une méthode et un système pour la décontamination des sols, dans lequel la procédure du processus d'assainissement du sol peut être contrôlée à distance.

### Résumé de l'invention

Dans un premier aspect, la présente invention fournie un procédé pour le traitement et/ou la décontamination des matériaux poreux et/ou des nappes aquifères comprenant les étapes suivantes :
- créer dans le matériel poreux au moins un puits de chauffage pour chauffer le matériel poreux, ledit puits de chauffage comprend au moins un tube de chauffage et au moins un tube d'injection de liquide sous pression,
- créer dans ledit matériel poreux au moins un puits d'extraction pour extraire la vapeur de contaminants, dans lequel le puits de chauffage et/ou le puits d'extraction est créé par l'introduction d'un tube dans le matériel poreux et/ou par excavation d'une partie du matériel poreux
- appliquer à la surface du matériel poreux une couche de matériel étanche,
- connecter le puits de chauffage et le puits d'extraction à au moins un boitier comprenant au moins un module de chauffage, un module d'injection de liquide sous pression et un module de récupération, ledit boitier est plaçable à l'extérieur du matériel poreux,
- fournir de la chaleur, par le module de chauffage, dans le tube de chauffage chauffant ainsi le puits de chauffage,
- injecter, par le module d'injection, au moins un liquide dans le tube d'injection pour vaporiser et/ou évaporer le liquide injecté et les contaminants présents dans le matériel poreux dans ledit puits de chauffage transformant ainsi les contaminants en vapeur de contaminants, et
- extraire, par le module d'extraction, la vapeur de contaminants généré dans le matériel poreux traité et/ou au moins une partie du liquide présent dans ledit matériel poreux à travers le puits d'extraction,
dans lequel la température de la vapeur obtenue par l'évaporation et la température du liquide injecté est d'au moins 200°C.

Dans un autre aspect, la présente invention fournie un système pour réaliser le procédé selon le premier aspect, le système comprend :
- au moins un boitier comprenant au moins un module de chauffage, un module d'injection de liquide sous pression et un module de récupération, ledit boitier est plaçable à l'extérieur du matériel poreux à traiter,
- des moyens de chauffage susceptibles d'être introduits dans le matériel poreux, lesdits moyens de chauffage comprennent plusieurs tubes de chauffage ayant une paroi externe thermo-conductrice, lesdits tubes de chauffage sont connectables au module de chauffage ; et plusieurs tubes d'injection de liquide sous pression connectables au module d'injection de liquide sous pression, lesdits tubes de chauffage et d'injection de liquide sont dépourvus de perforations,
- au moins un moyen d'extraction de vapeur pour extraire la vapeur de contaminants ledit moyen d'extraction est susceptibles d'être crée dans le matériel poreux et est connectable au module de récupération, et
- au moins une couche de matériel étanche applicable à la surface du matériel poreux à traiter,
dans lequel les tubes de chauffage et/ou les tubes d'injection sont de longueur variable.

Procédé LVI et système LVI réfèrent dans ce document respectivement au procédé et au système de l'invention. LVI fait référence à liquide-vapeur injection (Liquid-vapor injection).

L'invention est décrite dans ce qui suit en référence à un sol comme exemple. Le système et le procédé de l'invention ne sont pas limités au traitement des sols et peuvent être utilisés pour traiter tout autre matériel poreux et/ou nappe aquifère. Le traitement de ces derniers est ainsi couvert par la présente invention. Ainsi toute référence à un « sol » ci-dessous fait aussi référence à tout matériel poreux et/ou nappes aquifère. Le système et le procédé de l'invention sont utilisés pour la décontamination et/ou tout autre traitement des matériaux poreux et/ou des nappes aquifères.

Le système, appareil et procédé de traitement thermique des sols de la présente invention présente plusieurs avantages comparés aux systèmes, appareils et procédés décrit dans l'art antérieur. Parmi ces avantages on peut citer :
- faibles pertes thermiques vers l'extérieur : les procédés classiques d'injection de vapeur d'eau utilisent une unité de production de vapeur et un circuit aérien pour alimenter les puits d'injections en vapeur. Cette installation complexe conduit inévitablement à des pertes thermiques considérables vers l'extérieur à travers le circuit d'alimentation et nécessite généralement une consommation énergétique importante pour tenir compte de ces pertes. Une partie non négligeable de la vapeur se condense dans le circuit avant d'atteindre le puits d'injection. Cette condensation partielle conduit à une chute de la pression de vapeur dans les puits d'injection et dans le sol. Le procédé de la présente invention injecte de l'eau liquide directement dans le puits. La vapeur d'eau est produite uniquement dans le puits d'injection. Toute la chaleur véhiculée par la vapeur est utilisé pour chauffer le sol et les pertes thermiques vers l'extérieur sont quasi-nulles.
- le système est dépourvu de circuits aériens résistant à haute pression et à haute température: pour alimenter les puits d'injections en vapeur d'eau, les procédés classiques utilisent un circuit aérien assez complexe et couteux qui doit résister à une pression supérieure à 10 bars. L'injection directe de l'eau liquide dans les puits est une alternative moins coûteuse avec une mise en œuvre plus simple. Circuits aériens fait référence aux circuits se situant en dehors du sol.
- pas de pertes de charge et donc de chute de pression dans les puits d'injection : les procédés classiques utilisent un énorme circuit aérien pour alimenter les puits en vapeur d'eau. La circulation de vapeur dans ces circuits génère inévitablement des pertes de charge et conduit à une chute de pression. Pour remédier à ce problème des machines plus puissantes et plus onéreuses sont utilisées. Le procédé LVI ne nécessite que des mini pompes hautes pression pour l'injection de l'eau liquide directement dans les puits.
- meilleur ajustement du temps de traitement grâce à un contrôle aisé des paramètres de fonctionnement : lors du fonctionnement du procédé LVI, la pression de la vapeur d'eau dans le puits d'injection impose la vitesse de circulation de la vapeur à travers le sol. La pression est ajustée par la température de l'élément chauffant (puissance de chauffage) et par le débit d'eau injectée. Ces paramètres facilement contrôlables fixent le temps du traitement.
- non apport externe d'eau pour le traitement : le procédé LVI réutilise l'eau du sol récupérée dans les puits d'extraction pour réalimenter les puits d'injection. L'eau récupérée est traitée avant utilisation. En fin du traitement cette même eau va servir à refroidir et ré-humidifier le sol de sorte à remettre le site dans son état initial avant traitement.
- installation à faible coût : les éléments constituants de l'installation LVI sont simples et moins couteux que ceux d'une installation classique. Le puits d'injection renferme un tube métallique équipé d'un brûleur à gaz ou d'une résistance électrique (élément chauffant), un tube métallique pour l'injection de l'eau liquide connecté à un mini pompe à eau et à un tuyau souple de faible diamètre pour alimenter la pompe. Le puits d'extraction renferme un tube métallique perforé. Tous les liquides collectés sont séparés. L'eau récoltée est traitée puis sert à réalimenter les puits. Les produits purs sont collectés et stockés sur site.
- installation flexible: chaque puits possède son propre circuit de chauffage et son propre circuit d'alimentation en eau. Ainsi l'installation sur chaque parcelle traitée peut être démontée sans perturber les parcelles encore en cours de traitement.
- traitement plus efficace qu'un procédé classique puisque le procédé LVI permet d'atteindre dans le sol des températures largement supérieures à 100°C.
- fonctionnement adapté au site : selon la nature du site (concentration du polluant, humidité, perméabilité,...), un fonctionnement alterné et périodique du système avec une période d'injection suivi d'une période sans injection, tout en maintenant l'extraction sous vide peut réduire la quantité d'eau nécessaire pour le traitement et peut également réduire le temps global du traitement.

### Brève description des figures

**Figure 1** représente les composées du boitier du système.
**Figure 2** représente une vue externe du boitier.
**Figure 3** représente un mode de fonctionnement du système selon une coupe transversale d'un sol dans lequel sont introduit un puits de chauffage et des puits d'extraction.
**Figure 4** représente un principe de fonctionnement du système et du procédé de l'invention.
**Figure 5** représente section verticale d'un sol dans lequel sont créé des puits de chauffage et un puits d'extraction.
**Figure 6** représente les différentes configurations de création et/ou d'introduction des tubes du système dans un sol à traiter.
**Figure 7** représente un puits de chauffage crée dans le sol et comprenant un tube de chauffage et un tube d'injection.
**Figure 8** représente un mode de réalisation du système de l'invention. Les puits de chauffage et les puits d'extraction dans le sol sont représentés. Ces puits sont connectés au boitier de la **figure 1****.**

### Description des modes de réalisation exemplaires

L'invention concerne un système, un appareil et un procédé de traitement et de décontamination des sols par traitement thermique et injection de vapeur d'eau. Le système et le procédé permettent d'augmenter la température d'un sol contaminé ou d'un matériau contaminé grâce à la circulation forcée d'un fluide caloporteur, tel que la vapeur d'eau, afin de déplacer et extraire le polluant.

Dans la méthode et le système de l'invention, la vapeur d'eau est créée dans le sol à traiter. Ainsi, la méthode et le système de l'invention sont dépourvus d'installation externe au sol dans laquelle une vapeur à haute pression est circulée. Ceci permet de simplifier le processus et l'installation requise pour le traitement.

Le mot « environ » tel que utilisée ici fait référence à une valeur mesurable comme un paramètre, une quantité, un intervalle de temps. Le mot « environ » couvre les variations de +/-25% ou moins, de préférence +/-10% ou moins, plus de préférence +/-5% ou moins, encore plus de préférence +/-1% ou moins, et encore plus de préférence +/-0.1% ou moins de et à partir de la valeur spécifiée, dans la mesure où de telles variations sont appropriées pour réaliser l'invention décrite. Toutefois, il est bien entendu que la valeur à laquelle le mot «environ» fait référence est lui-même également spécifiquement décrit.

L'invention permet le traitement thermique des sols, des nappes aquifères et de tout matériau contaminé par des composés volatils et semi volatils ayant un point d'ébullition à pression atmosphérique < à 550°C. Comparés à ceux décrit dans l'art antérieur, le procédé et le système de l'invention sont efficaces, simples et facile à mettre en œuvre, possèdent un coût d'installation faible, un rendement énergétique élevé et un traitement rapide.

Dans un premier aspect, la présente invention fournie un procédé pour le traitement et/ou la décontamination des matériaux poreux **49** et/ou des nappes aquifères. Le procédé comprend les étapes suivantes :
- créer dans le matériel poreux au moins un puits de chauffage pour chauffer le matériel poreux, ledit puits de chauffage comprend au moins un tube de chauffage et au moins un tube d'injection de liquide sous pression,
- créer dans ledit matériel poreux au moins un puits d'extraction pour extraire la vapeur de contaminants,
- appliquer à la surface du matériel poreux une couche de matériel étanche,
- connecter le puits de chauffage et le puits d'extraction à au moins un boitier comprenant au moins un module de chauffage, un module d'injection de liquide sous pression et un module de récupération, ledit boitier est plaçable à l'extérieur du matériel poreux,
- fournir de la chaleur, par le module de chauffage, dans le tube de chauffage chauffant ainsi le puits de chauffage,
- injecter, par le module d'injection, au moins un liquide dans le tube d'injection pour vaporiser et/ou évaporer le liquide injecté et les contaminants présents dans le matériel poreux transformant ainsi les contaminants en vapeur de contaminants, et
- extraire, par le module d'extraction, la vapeur de contaminants généré dans le matériel poreux traité et/ou au moins une partie du liquide présent dans ledit matériel poreux à travers le puits d'extraction fournissant ainsi un matériel poreux traité et/ou décontaminé.

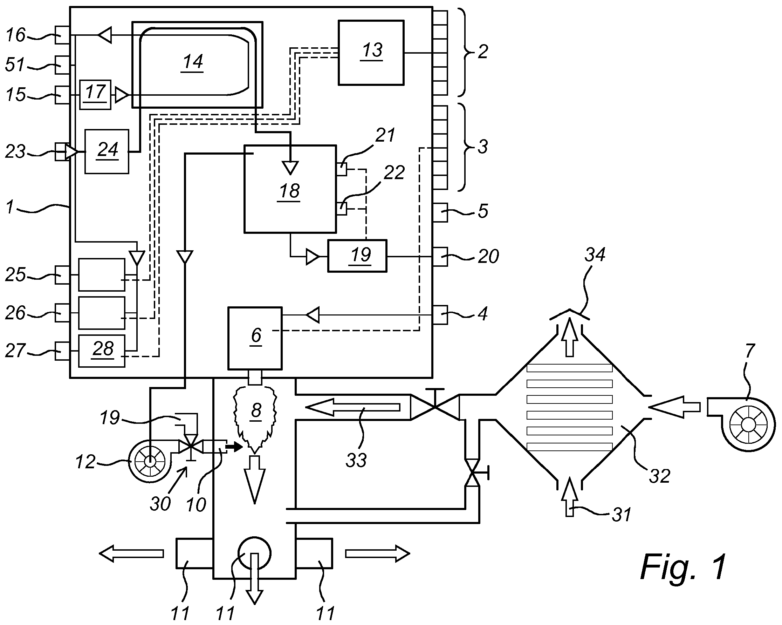

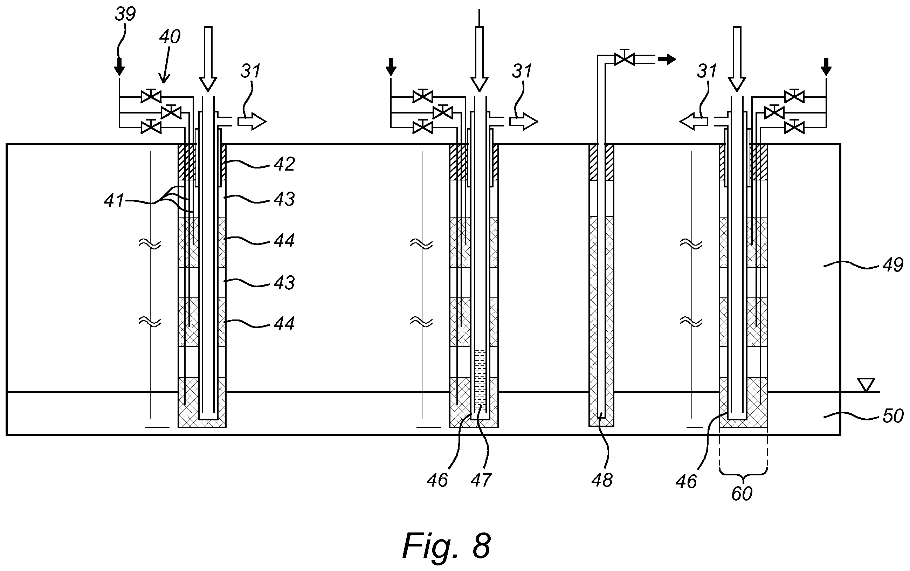

Selon l'invention, le puits de chauffage **(60,** **figure 8****)** peut être crée par excavation d'une partie du sol et/ou par l'introduction d'un tube enveloppant de chauffage dans ledit sol. Ledit tube enveloppant de chauffage comprend le tube de chauffage et le tube d'injection de liquide sous pression. Les parois du tube enveloppant et/ou du tube de chauffage **(46,** **figure 8****)** et/ou du tube d'injection de liquide sous pression **(41,** **figure 8****)** sont thermo-conducteurs. Dans un mode de réalisation préféré, la distance maximale entre le tube d'injection de liquide sous pression **(41,** **figure 8****)** et le tube de chauffage est de 1 mètre, de préférence 1.2 m, encore de préférence 1.5 m. Ladite distance est d'au moins 0.2 m, de préférence 0.4m, encore de préférence 0.6m, encore plus de préférence 0.8m. Les deux tubes peuvent être en contact direct signifiant qu'au moins une partie de la paroi d'un tube est en contact direct avec au moins une partie de la paroi de l'autre tube. Dans un mode de réalisation préféré, les tubes de chauffage **46** dans **figure 8** sont connectés aux sorties de chaleur **11** du brûleur **6** de la **figure 1****.** Ainsi, le bruleur fournit de la chaleur aux puits de chauffage. Un bruleur peut être connecté à au moins un puits de chauffage.

Puits de chauffage est aussi appelé puits d'injection le long du texte. L'invention couvre les exemples de réalisations dans lesquels un tube d'injection est inséré dans chaque puits de chauffage et dans lesquels un tube d'injection est introduit dans un puits de chauffage sur deux ou plus que deux.

Dans un mode de réalisation préféré, le tube d'injection **(41,** **figure 8****)** correspond à l'espace du puits de chauffage non occupé par le tube de chauffage. Le liquide peut ainsi être directement injecté dans le puits de chauffage.

Selon l'invention, le puits d'extraction peut être crée par excavation d'une partie du sol et/ou par introduction d'au moins un tube ayant des parois perforés dans ledit sol. Pour l'extraction et la collecte des vapeurs de contaminants, des vapeurs du liquide injecté sous pression et des liquides si présents dans le puits, une dépression élevée est appliquée dans le sol à travers le puits d'extraction. La dépression est d'au moins -0.01 bars, de préférence proche du vide absolu. La dépression est de préférence appliquée en utilisant un extracteur haut pression placée en aval du circuit d'extraction ou tout autre moyen connu par l'homme de l'art.

Le matériel étanche appliqué sur la surface du sol à traiter **49** peut contenir du sable fin, du béton, un mélange de sable fin et de béton ou tout autre matériel connu par l'homme du métier. Le matériel étanche est appliqué en couche et permet d'éviter l'échappement de la vapeur du liquide vers l'extérieur du sol. L'épaisseur de la couche de matériel étanche est d'au moins 40 cm, de préférence au moins 50 cm, encore de préférence au moins 60 cm et de maximum 100 cm, de préférence maximum 80 cm, encore de préférence maximum 70 cm ou toute autre valeurs compris entre ceux mentionnées précédemment. Le restant du puits de chauffage peut être rempli par au moins une matière perméable **(44,** **figure 8****)** tel que du gravier de taille moyenne. Ladite matière perméable peut être déposée dans le puits de chauffage avant ou après l'introduction dans le puits des tubes de chauffage et d'injection. Ladite matière sera déposée et remplira le vide autour des tubes compris dans le puits de chauffage.

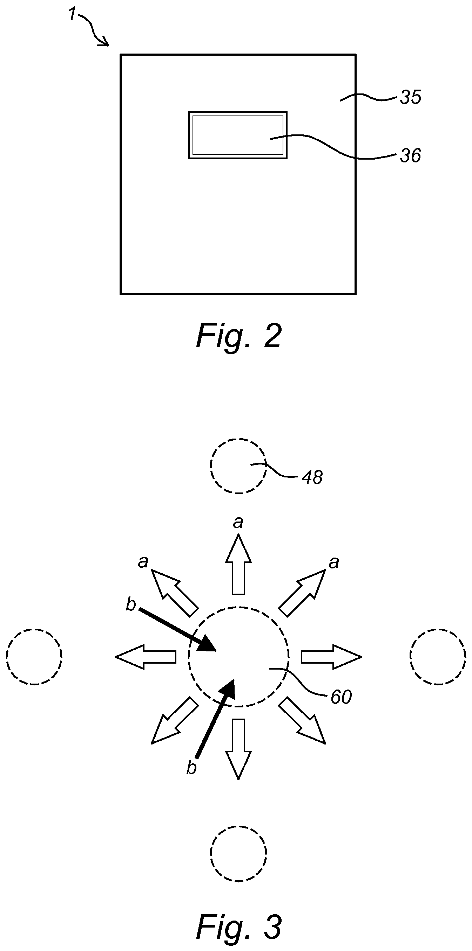

Le procédé LVI de l'invention peut être appliqué en mode in-situ ou en mode ex-situ, dans la zone vadose du sol ou dans la zone saturée (nappe aquifères et/ou phréatique). Il utilise d'une part la convection forcée comme mécanisme principal de transfert de chaleur pour chauffer le sol à des températures largement supérieures à 100°C et d'autre part le vide pour extraire les vapeurs d'eau et des contaminants produites dans le sol. En effet, pendant le traitement thermique, le liquide injecté dans le puits de chauffage se transforme instantanément en vapeur sous l'effet de la chaleur fournie dans le tube de chauffage ou en contact avec les parois du tube de chauffage. La vapeur aura une haute pression et une haute température qui vaporise l'eau présente initialement dans le sol et tout autre produit présent dans le sol tel que les composés volatils et semi volatils. La vapeur du liquide permet de chauffer le sol, par circulation forcée entre les grains du sol, de traiter ce dernier et de créer des micros fissures dans les zones non perméables du sol. Le sol est ainsi chauffé principalement par convection. Les contaminants présents dans le sol chauffé seront ainsi vaporisés et/ou évaporés et seront sous forme de vapeur de contaminants. Les micros fissures augmentent l'efficacité et réduisent considérablement le temps du traitement. **Figure 3** représente un mode de fonctionnement du système selon une coupe transversale d'un sol dans lequel sont introduit un puits de chauffage **60** et des puits d'extraction **48.** Les flèches b indiquent le sens d'injection de chaleur et d'eau dans le sol alors que les flèches a indiquent le sens de propagation dans le sol de la vapeur du liquide injecté dans les puits d'injection.

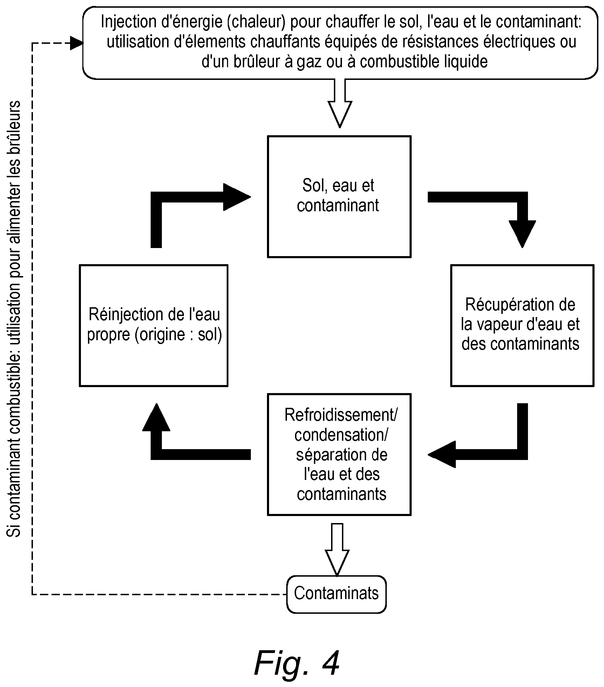

**Figure 4** représente un principe de fonctionnement du système et du procédé de l'invention. Le mode de fonctionnement du système et du procédé de l'invention est sous forme de cycle fermé dans lequel, les liquides et/ou vapeurs récupérés peuvent être réutilisés. L'énergie peut aussi provenir des contaminants collectés qui sont utilisés comme combustibles injectés dans les brûleurs.

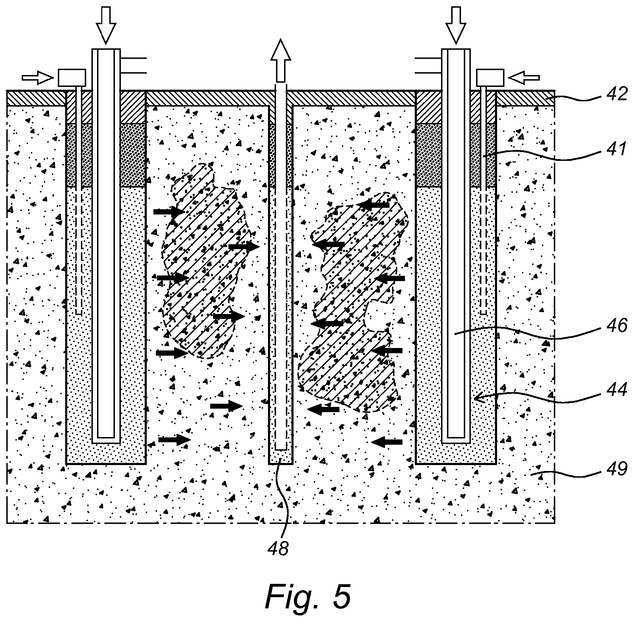

Le procédé de l'invention permet de décontaminer différents types de sols même les sols peu perméable. Ceci est réalisable grâce à la vapeur de liquide à haute température et haute pression. Ladite vapeur créé son propre chemin pour traverser le sol à traiter. En présence des chemins préférentiels générés par la poussée de vapeur de liquide à haute pression, la chaleur sera véhiculée dans le sol principalement par convection (circulation de la vapeur) mais aussi par conduction et rayonnement entre les grains du sol. Cette chaleur transmise au sol accroît rapidement la température ce qui permet d'atteindre en un temps record des températures suffisamment élevées pour vaporiser les contaminants présent dans le sol. Les vapeurs, de liquide et de contaminants, ainsi produites sont aspirées en dehors du sol par le puits d'extraction. Les flèches pleines dans **figure 5** représentent le sens de déplacement des vapeurs dans le sol, i.e. vers le puits d'extraction **48.** Sur la **figure 5** les vapeurs sont représentés par la zone hachurée.

Selon l'invention, dans un mode de réalisation préféré, la température de la vapeur obtenue par l'évaporation et/ou la température du liquide injecté est d'au moins 200°C, de préférence au moins 250°C, encore de préférence au moins 300°C. Ladite température peut atteindre 550°C, de préférence 500°C, encore de préférence 450°C ou toute autre valeurs compris entre ceux mentionnées précédemment.

Dans un mode de réalisation préféré, l'action de fournir la chaleur et/ou l'injection de liquide sous pression et/ou l'extraction de vapeur de contaminant est effectuée de façon continue. Dans un mode de réalisation préféré, l'action de fournir la chaleur et/ou l'injection de liquide sous pression et/ou l'extraction de vapeur de contaminant est effectuée de façon discontinue.

Dans un mode de réalisation préféré, le module de chauffage et ainsi le bruleur possède un fonctionnement alterné et périodique avec une période d'injection de liquide suivi d'une période sans injection. En maintenant l'extraction à travers le puits d'extraction, le fonctionnement périodique réduit la quantité de liquide nécessaire pour le traitement et réduit le temps global du traitement.

Le fonctionnement du bruleur est périodique avec une période de chauffage des tubes de chauffages jusqu'à la température maximale de chauffe suivi d'une période de chauffage du sol uniquement. La température maximale de chauffe est comprise entre 550 et 750°C. Au cours de la période de chauffage du sol uniquement, l'énergie stockée dans un accumulateur de chaleur présent dans les tubes de chauffage fournit de la chaleur au sol et maintien la température des tubes de l'ordre de 350-550°C. Pendant la période de chauffage des tubes, le brûleur est allumé en continu et il est à l'arrêt ou à bas régime de fonctionnement pendant la période de chauffage du sol par l'énergie stockée dans les tubes par l'accumulateur de chaleur.

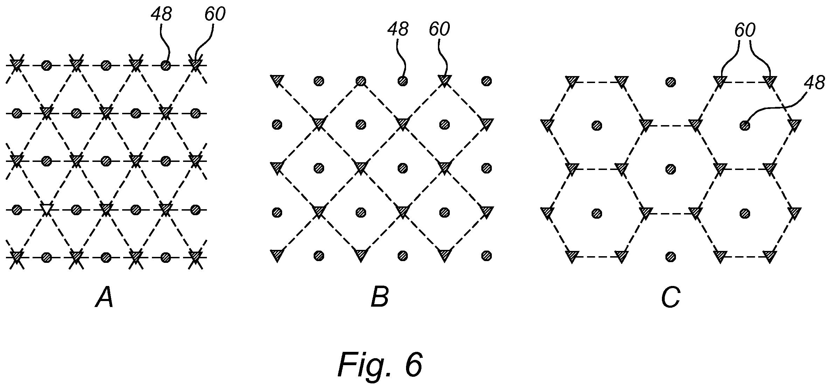

Le liquide injecté dans le puits de chauffage peut être de l'eau, de l'eau supplémentée d'au moins un produit chimique ou tout autre liquide. Le liquide peut être à température ambiante ou préchauffé. La température de préchauffage peut varier de la température ambiante jusqu'à environ 80°C, de préférence environ 95°C. Le liquide est injecté sous pression dans les tubes d'injections, aussi appelé puits d'injection, qui peuvent être placés par rapport à la surface du sol, en horizontal, vertical ou oblique selon une géométrie bien définie dans la zone contaminée du sol **(****figure 6****).**

Le liquide peut provenir du sol même, en utilisant l'eau présente initialement dans le sol, et/ou de toute autre source comme par exemple une nappe aquifère ou une source externe. En utilisant du liquide ou de l'eau collectée dans le sol ou dans la nappe aquifère, le procédé de l'invention ne nécessite aucun apport externe d'eau. Le liquide peut être injectée avec un débit constant et/ou continu par une mini pompe électrique haute pression. Le liquide peut aussi être injectée par imputions en alternant période d'injection et période de non injection. Lesdites périodes durent au minimum 1 seconde, de préférence 3 secondes, encore de préférence 5 secondes, encore plus de préférence 10 secondes. Lesdites périodes durent au maximum 30 seconde, de préférence 25 secondes, encore de préférence 20 secondes, encore plus de préférence 15 secondes. Le mode de fonctionnement par imputions permet de mieux gérer le fonctionnement du procédé. En effet, un capteur de pression connecté à la mini pompe et placé dans le tube d'injection et/ou dans le puits d'injection et commande le fonctionnement de ladite pompe en fonction de la pression mesuré dans le puits. Une électrovanne peut être placée après la pompe d'injection d'eau. Un clapet anti-retour peut-être placé aussi après la pompe.

La mini-pompe du système peut avoir un débit maximal d'eau de 10L/h par mètre linéaire de tube de chauffe, de préférence 9L/h, encore de préférence 8L/h, encore plus de préférence 7L/h, encore plus de préférence 6L/h, encore plus de préférence 5L/h. Le débit minimal d'eau est de 2L/h, de préférence 3L/h, encore de préférence 4L/h. La pression maximale est de 10 bars, de préférence 12 bars, encore de préférence 14 bars, encore plus de préférence 15 bars, encore plus de préférence 20 bars, encore plus de préférence 25 bars, encore plus de préférence 30 bars. La pression minimale est de 2 bars, de préférence, 4 bars, encore de préférence 6 bars, encore plus de préférence 8 bars. Tout autre mini pompe ayant le même débit ou un débit différent et/ou qui fournit une pression plus élevée ou plus basse peut être utilisée.

Des éléments chauffants compris dans le module de chauffage du boitier chauffent les puits d'injection. La température de chauffage est comprise entre 200 et 550°C, de préférence entre 250 et 500°C, encore de préférence entre 300 et 400°C. Les éléments chauffants peuvent être des résistances électriques ou tubes métalliques équipés d'un ou de plusieurs brûleurs à gaz ou à combustibles liquides ou tout autre élément de chauffage connu par l'homme du métier.

L'énergie présente dans le puits de chauffage et celle provenant en continue des éléments chauffants vaporisent instantanément in-situ le liquide injecté dans le tube d'injection. Le liquide est alors transformé en vapeur à haute température. Ladite haute température est supérieure à 100°C et ladite haute pression est supérieure à 10 bars.

La température de la vapeur du liquide dépend de l'énergie véhiculée par les gaz dans les éléments chauffants et/ou de la puissance de chauffe de la résistance électrique. La température de la vapeur du liquide dépend de l'élément chauffant (puissance de chauffe) et de la quantité de liquide injectée dans le puits de chauffage. Quant à la pression de la vapeur, elle dépend de la perméabilité du milieu et donc du sol à traiter. Plus le sol est perméable plus la pression de vapeur est faible. La vapeur du liquide sous pression est poussée dans le sol et entraine tous les liquides présents dans le sol mais entraine aussi l'évaporation et/ou la température des contaminants présents dans le sol.

L'injection de liquide peut être continue ou par impulsions. Les vapeurs des contaminants et les liquides sont collectés dans le puits d'extraction. Après récupération, les vapeurs des contaminants et les liquides sont refroidis et séparés. Le liquide collecté est réinjectée de nouveau dans le sol à travers le puits d'injection. Le cycle est répété jusqu'à élimination totale des contaminants.

Différent capteurs sont utilisés pour suivre le fonctionnement du traitement. Par exemple, des capteurs de pression et des capteurs de température sont placés à différents endroits dans les puits d'extraction et/ou les puits d'injection et/ou dans le sol à traiter. L'analyse de la vapeur collectée à la sortie d'un puits d'extraction au cours du traitement permet de suivre l'évolution du traitement. Lorsque la concentration des contaminants chute considérablement et/ou est absente dans les vapeurs et les liquides récupérés, le traitement peut être considéré comme terminé dans la zone du puits en question.

Pour arrêter le traitement, la chaleur n'est plus fournie dans le tube de chauffage par le module de chauffage. Après l'arrêt du chauffage, l'aspiration par le puits d'extraction peut être interrompue ou peut être maintenue. L'injection d'au moins un liquide froid dans le tube d'injection peut être maintenue accélérant ainsi le refroidissement sol traité et sa ré-humidification de sorte à remettre le sol dans son état initial avant traitement.

La quantité de liquide collectée à la fin du traitement est quasi-nulle, le volume est d'environ 0 litre. Les contaminants sont récupérés sous forme liquide dans des citernes connectées au boitier. Le nombre des citernes dépend de la quantité initiale des contaminants présents dans le sol.

Dans un mode de réalisation préféré, le liquide extrait du sol est réinjecté dans le tube d'injection et/ou la vapeur de contaminants extraite du sol est réinjectée dans le module de chauffage.

En résumé, la chaleur de l'élément chauffant et celle contenue dans le puits d'injection sont transmises au liquide injectée dans le puits. Cet échange de chaleur transforme le liquide en vapeur à haute température et à haute pression. Cette vapeur traverse le sol, en circulant entre ses graines, grâce à la différence de pression créée entre le puits d'injection et le puits d'extraction. La vapeur en mouvement transforme les contaminants en vapeur de contaminants qui sera entrainé et acheminée vers le puits d'extraction.

Après son passage dans le sol, la vapeur est refroidie, retransformée en eau, séparée du polluant et renvoyée vers le puits d'injection pour un nouveau cycle.

Le procédé de l'invention est plus efficace comparé aux procédés de l'art antérieur puisqu'il permet d'atteindre dans le sol des températures largement supérieures à 100°C.

Dans un autre aspect, la présente invention fournie un système pour le traitement et/ou la décontamination des matériaux poreux et/ou des nappes aquifères. Le système comprend :
- au moins un boitier comprenant au moins un module de chauffage, un module d'injection de liquide sous pression et un module de récupération, ledit boitier est plaçable à l'extérieur du matériel poreux à traiter,
- des moyens de chauffage susceptibles d'être introduits dans le matériel poreux, lesdits moyens de chauffage comprennent au moins un tube de chauffage ayant une paroi externe thermo-conductrice, ledit tube de chauffage est connectable au module de chauffage ; et au moins un tube d'injection de liquide sous pression connectable au module d'injection de liquide sous pression, lesdits tubes de chauffage et d'injection de liquide sont dépourvus de perforations,
- au moins un moyen d'extraction de vapeur pour extraire la vapeur de contaminants ledit moyen d'extraction est susceptibles d'être crée dans le matériel poreux et est connectable au module de récupération, et
- au moins une couche de matériel étanche **(42,** **figure 8****)** applicable à la surface du matériel poreux à traiter.

Dans un mode de réalisation préféré, le puits d'extraction peut être crée par excavation d'une partie du sol et/ou par introduction d'au moins un tube ayant des parois perforés dans ledit sol.

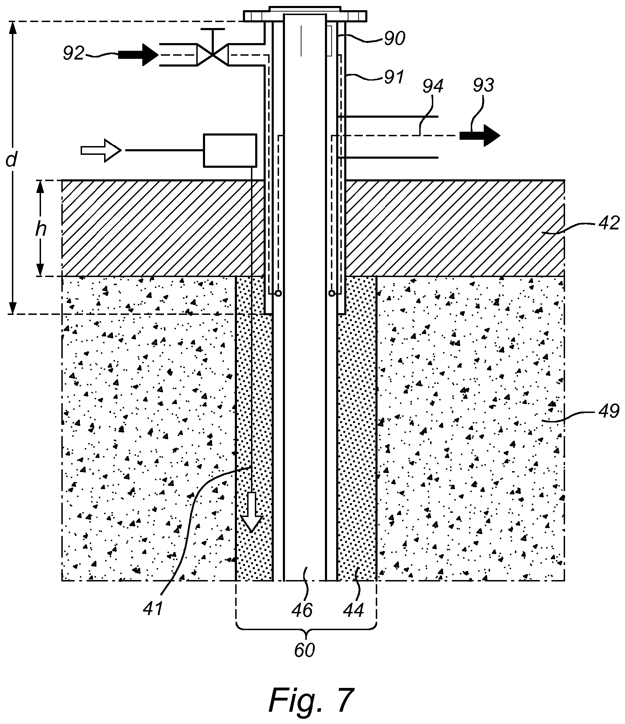

Dans un mode de réalisation préféré, la paroi externe **90** du tube de chauffage est recouverte par une deuxième paroi externe **91** possédant au moins une entrée **92** et au moins une sortie **93,** la dite deuxième paroi externe défini ainsi un espace externe **94** dans lequel de l'air frais est circulé (flèches pleines dans **figure 7****).**

Dans un mode de réalisation préféré, la deuxième paroi du tube de chauffage s'étale sur une distance « d » **figure 7** qui est proximale au boitier et qui correspond à au moins la hauteur « h » de la couche de matériel étanche **42.** Ceci évite la surchauffe et donc la présence de fissures dans la couche de matière étanche sous l'effet de la chaleur. Le tube de chauffage comprend ainsi trois enveloppes sur au moins une partie de sa longueur qui s'étend sur la distance « d ». La partie supérieure (50cm du dessus). Entre la deuxième et la troisième enveloppe, de l'air frais est circulé pour refroidir l'enveloppe externe. La valeur de « d » au moins égale à l'épaisseur de la couche de matériel étanche mentionnée ci-dessus.

Le boitier du système LVI est représenté par le boitier **1 (****Figure 1****).** Le boitier est plaçable à l'extérieur du sol. Les dimensions du boitier peuvent être environ 500mm pour la hauteur, 400mm pour la largeur et 250mm pour l'épaisseur. Le poids de l'ensemble du boitier ne dépasse pas les 30 kg. Le boitier est ainsi non encombrant et facilement transportable. Le boitier **1** comprend un module de chauffage, un module d'injection de liquide sous pression, un module de récupération des produits provenant du sol et un module de commande du traitement.

Le module de chauffage comprend un brûleur **6** à fuel gaz ou liquide. Le fuel est fourni au bruleur via une source de fuel externe **4.** Après refroidissement, dans l'échangeur de chaleur **14,** des vapeurs provenant du sol à travers le puits d'extraction **48** et/ou les gaz non condensés sont envoyés directement dans la flamme **10** du brûleur pour être oxydés en produits moins nocifs (H₂O et CO₂,...) ou dirigés vers une sortie **29** pour un traitement externe. Une vanne à 3-voies **30** permet de faire le choix du moment auquel les vapeurs et/ou les gaz sont envoyés au bruleur: au début ou pendant le traitement.

Dans un mode de réalisation préféré, le brûleur **6** possède un mode de fonctionnement périodique. Ledit mode possède deux régimes : un régime bas et donc faible puissance et un régime haut et donc haute puissance. Le brûleur **6** permet ainsi une économie d'énergie considérable. Dans un mode de réalisation préféré, le brûleur **6** possède plus qu'une sortie des gaz chauds **11,** **figure 1** par laquelle de la chaleur est fournie au puits de chauffage.

Dans un mode de réalisation préféré, chaque tube de chauffage comprend au moins un accumulateur de chaleur **(47,** **figure 8****).** L'accumulateur de chaleur peut être une masse supplémentaire qui permet d'emmagasiner la chaleur provenant du brûleur. L'accumulateur de chaleur **47** peut être en métal ou en céramique ou tout autre matériau capable de stocker la chaleur et ayant une conductivité thermique supérieure ou égale à 5W/mK. Ceci permet de maintenir une température constante des parois du tube de chauffage tout en économisant de l'énergie sur le brûleur.

Le module d'extraction est équipé d'un échangeur de chaleur/condenseur **14,** d'un séparateur gaz/liquide **18,** d'une pompe de récupération des liquides **19** commandée par des sondes de niveau **21, 22** et d'un extracteur haute pression **12.**

L'automate programmable PLC **(36,** **figure 2****)** commande et règle l'ensemble de l'installation pendant le traitement. Ceci permet d'automatiser le processus. Le PLC est accessible à l'utilisateur à travers au moins l'une des surfaces externes **35** du boitier **1** et/ou ou à distance (connexion à distance).

Après refroidissement dans l'échangeur de chaleur/condenseur **14,** les vapeurs provenant du sol à travers le puits d'extraction **(48,** **figure 8****)** et/ou les gaz non condensés sont envoyés directement dans la flamme **8** du brûleur **6** pour être oxydés en produits moins nocifs (H₂O et CO₂,...) ou dirigés vers la sortie **29** pour un traitement externe.

Un filtre à poussière **24** et/ou un filtre à eau **17** est placé en amont de l'échangeur de chaleur/condenseur **14** et permet d'éviter l'encrassement de l'ensemble de l'installation. L'échangeur de chaleur/condenseur **14** est refroidit à l'air frais grâce à un ventilateur qui est placé sur ledit échangeur ou refroidit par un liquide, tel que de l'eau, qui est introduit dans le boitier par au moins une entrée **15** et est sorti par au moins une sortie **16.**

Dans un mode de réalisation préféré, le boitier comprend au moins un circuit de refroidissement pour refroidir le système et assurer son fonctionnement continu. Le circuit de refroidissement est connecté au puits d'extraction et comprend au moins un échangeur de chaleur/condenseur qui condense la vapeur sortant dudit puits. Le condenseur est un appareil comprenant des tubes dans lesquels circule un fluide froid : de l'air ou de l'eau froide provenant du sol ou prélevée à une source extérieure. Au contact de ces tubes, la vapeur extraite du sol se condense pour se transformer en eau.

Le liquide provenant du sol et récupérée après condensation peut être traité en externe dans un boitier placé à proximité du sol traité. Ledit liquide peut être utilisé pour refroidir L'échangeur de chaleur/condenseur **14.** Le même liquide peut être réinjecté, par les connections **25, 26 et 27,** dans le tube d'injection en utilisant une pompe haute pression **28.** Dans un mode de réalisation préféré, le liquide injecté dans le tube d'injection comprend au moins un produit chimique. De préférence produit chimique d'oxydation. Le liquide avec le produit chimique peut être injecté à n'importe quel moment durant le traitement. De préférence, ledit liquide est injecté après le traitement thermique. Ceci permet de compléter le traitement thermique et peut être utilisé pour le traitement chimique d'une source ou d'un panache de pollution dans la nappe aquifère. Ledit produit chimique peut provenir d'une source externe via une entré **51.**

Toutes les connexions au boitier tel que les connexions pour l'eau **15, 16, 25, 26, 27,** le gaz, l'électricité **5,** la vapeur **23, 20,** les sondes de pression **2,** les thermocouples **3,** la source de fuel externe **4,** entré de produit chimique **51** de la **figure 1** sont étanches et placées à l'extérieur du boitier. Au moins, les connexions de l'eau, de la vapeur et du gaz sont réalisées avec des raccords rapides pneumatiques.

Les différents capteurs de pression et de température permettent à travers au moins un transmetteur de pression **13** et/ou à travers le PLC de contrôler, suivre et doser l'injection de la chaleur et de l'eau dans le sol de sorte à optimiser le traitement. Le transmetteur de pression **13** et/ou le PLC permet aussi la communication à distance avec l'installation mais également de stopper le traitement en cas de problème.

Dans un mode de réalisation préféré, le module de chauffage est connecté à au moins un échangeur de chaleur **32** comprenant au moins ventilateur **7.** L'échangeur peut être un échangeur air/air. Pour améliorer le rendement thermique du procédé, de l'air primaire **33** est fourni au module de chauffage. Cet air primaire est préchauffé par les gaz de chauffage **31** récupérés à la sortie des puits de chauffage **60.** Un échangeur de chaleur Air-Air **32** est utilisé pour la récupération des gaz. Après passage dans l'échangeur de chaleur **32,** les gaz de chauffage passent par un extracteur principal avant d'être rejetés par une cheminée **34.**

Dans un mode de réalisation préféré, un nombre déterminé de tubes de chauffage sont placés dans des puits de chauffage. Aussi un nombre déterminé de puits d'extraction sont placés créés. Ce nombre peut être 2, 3, 4, 5 ou plus. Le nombre des tubes de chauffage et celui des puits d'extraction peuvent être égaux ou non.

Du liquide est injecté à travers un ou plusieurs tubes d'injection **(41,** **figure 8****)** le long du puits de chauffage. L'injection du liquide peut se faire à différents niveaux avec l'utilisation de plusieurs tubes d'injections ayant des longueurs différentes **(****figure 8****).** L'injection de l'eau dans les puits d'injection est effectuée par les pompes liquides hautes pression **28.** Dès son injection, l'eau se transforme instantanément en vapeur à haute température et haute pression. La vapeur d'eau circule à travers le sol grâce à la différence de pression créée par sa propre pression et la pression qui règne dans les puits d'extraction.

Selon l'invention, plusieurs tubes de chauffages et/ou d'injection et/ou puits d'extraction sont introduits dans le sol à traiter. Lesdits tubes sont de longueur différente et/ou variable. Ceci permet de traiter sélectivement différentes zones du sol s'étendant sur des profondeurs différentes. A titre d'exemple, deux tubes d'injection de liquide de longueurs différentes sont introduits dans le sol à traiter. Le tube le plus long permet d'injecter du liquide à une profondeur « P » du sol alors que le tube le moins long permet d'injecter du liquide à une profondeur « P' » du sol. L'utilisateur pourra choisir la profondeur sur laquelle le sol sera traité en injectant le liquide dans le tube d'injection correspondant à la profondeur son choix déterminant ainsi la section du sol à traiter. Cet exemple est représenté dans la **figure 8** ou plusieurs tubes d'injections **41** sont représentés. Plus que deux tubes de chauffages et/ou d'injection et/ou puits d'extractions peuvent être utilisés.

Pour un traitement séparé, on peut aussi diviser le puits de chauffage en plusieurs zones distinctes **(****figure 8****).** Ces zones seront séparées par une couche de matériel étanche **43.** Un tube d'injection d'eau **41** sera placé dans chaque zone. Pour la collecte des vapeurs (eau et contaminant), une dépression élevée sera appliquée dans le sol à travers le puits d'extraction **45** par l'extracteur **12.**

Le tube de chauffage et/ou le tube d'injection utilisable dans le système de l'invention peut être un tube présent sur le marché et peut avoir une forme géométrique quelconque : circulaire, rectangulaire, triangulaire, hexagonale ou autre. Les tubes et produits tubulaires en acier peuvent être utilisés. Parmi ces derniers on peut citer : NF A 49-111, NF A 49-115, NF A 49-141, NF A 49-145, NF A 49-150, NF A 49-190, NF A 49-700, NF EN 253, NF EN 448.

Le placement et le positionnement des puits de chauffages et des puits d'extraction conditionnent l'efficacité du traitement. Le choix peut être fondé sur une connaissance approfondie des caractéristiques du sol comme la perméabilité, l'humidité et la distribution du polluant. Lorsque la zone à traiter est assez grande, le sol est forcément hétérogène. Dans ce cas, les puits peuvent avoir une configuration triangulaire **(A** et **B,** **figure 6****).** Cette configuration alterne puits de chauffage et puits d'extractions de sorte que chaque type puits est entouré par quatre puits de l'autre type. L'hétérogénéité du sol et/ou la répartition du polluant est prise en compte pour la mise en place des puits : espacements et positions des puits.

Lorsque la zone à traiter est petite et/ou perméable et/ou homogène, la distance entre les puits d'extractions peut être plus importante et la configuration hexagonale **(C,** **figure 6****)** peut être utilisée. Dans cette configuration, chaque puits d'extraction est entouré de 6 puits de chauffage.

En configuration triangulaire un espacement entre deux puits varie entre 1.5m à 4m, de préférence de 2m à 3m. Dans le cas d'une configuration hexagonale l'espacement peut varier de 2 à 5m. Dans les deux cas la nature du sol et celle du contaminant imposent la distance entre les puits.

L'invention permet d'augmenter la température d'un sol ou d'un matériau contaminé grâce à la circulation forcée d'un fluide caloporteur, afin de déplacer et extraire le polluant. Le sol est chauffé par conduction dans une première phase de manière à augmenter la perméabilité du sol. Dans une deuxième phase, un liquide est injecté ad hoc et sera vaporisé. Cette injection pouvant être réitérée plusieurs fois de suite pour obtenir une injection adéquate. L'invention permet d'injecter des réactifs chimiques oxydants ou réducteurs dans un sol pollué de manière à ce que ceux-ci réagissent dans la masse avec les polluants.

L'injection des fluides sous pression permet de fluidifier les hydrocarbures et augmenter ainsi le taux d'extraction des hydrocarbures du sous-sol.

Dans un autre aspect, l'invention fournie pour l'utilisation du système tel que décrit ci-dessus pour le traitement des sols et/ou des nappes aquifères selon le procédé de l'invention.

A noter que les modes de réalisation préféré du système de l'invention sont applicable au processus de l'invention et vice versa.

## Revendications

1. Procédé pour le traitement et/ou la décontamination des matériaux poreux des nappes aquifères comprenant les étapes suivantes :
- créer dans le matériel poreux (49) au moins un puits de chauffage (60) pour chauffer le matériel poreux (49), ledit puits de chauffage comprend au moins un tube de chauffage (46) et au moins un tube d'injection (41) de liquide sous pression,
- créer dans ledit matériel poreux (49) au moins un puits d'extraction (48) pour extraire la vapeur de contaminants, dans lequel le puits de chauffage (60) et/ou le puits d'extraction (48) est créé par l'introduction d'un tube dans le matériel poreux (49) et/ou par excavation d'une partie du matériel poreux,
- appliquer à la surface du matériel poreux (49) une couche de matériel étanche (42),
- connecter le puits de chauffage (60) et le puits d'extraction (48) à au moins un boitier (1) comprenant au moins un module de chauffage (6), un module d'injection de liquide sous pression et un module de récupération, ledit boitier (1) est plaçable à l'extérieur et à proximité du matériel poreux (49),
- fournir de la chaleur, par le module de chauffage (6), dans le tube de chauffage chauffant (46) ainsi le puits de chauffage (60),
- injecter, par le module d'injection, au moins un liquide dans le tube d'injection (41) pour vaporiser et évaporer le liquide injecté et les contaminants présents dans le matériel poreux (49) dans ledit puits de chauffage (60), transformant ainsi les contaminants en vapeur de contaminants, et
- extraire, par le module d'extraction, la vapeur de contaminants généré dans le matériel poreux (49) traité et/ou au moins une partie du liquide présent dans ledit matériel poreux (49) à travers le puits d'extraction (48),
**caractérisé en ce que** la température de la vapeur obtenue par l'évaporation et la température du liquide injecté est d'au moins 200°C.

2. Procédé selon la revendication 1 dans lequel l'étape de fournir la chaleur dans le tube de chauffage (46) et/ou l'injection de liquide sous pression dans le tube d'injection (41) et/ou l'extraction de vapeur de contaminant est effectuée de façon continue.

3. Procédé selon au moins une des revendications 1-2 dans lequel l'étape de fournir la chaleur dans tube de chauffage (46) et/ou l'injection de liquide sous pression dans le tube d'injection (41) et/ou l'extraction de vapeur de contaminant est effectuée de façon discontinue.

4. Procédé selon au moins une des revendications 1-3 dans lequel le liquide injecté dans le tube d'injection (41) peut provenir du matériel poreux (49) à traiter.

5. Procédé selon au moins une des revendications 1-4 dans lequel la distance maximale entre le tube d'injection (41) de liquide sous pression et le tube de chauffage (46) est de 1.5 mètre.

6. Procédé selon au moins une des revendications 1-5 dans lequel le liquide extraits du matériel poreux (49) est réinjecté dans le tube d'injection (41).

7. Procédé selon au moins une des revendications 1-6 dans lequel la vapeur de contaminants extraite du matériel poreux (49) est réinjectée dans le module de chauffage (6).

8. Système pour réaliser le procédé selon au moins une des revendications 1-7 comprenant :
- au moins un boitier (1) comprenant au moins un module de chauffage (6), un module d'injection de liquide sous pression et un module de récupération, ledit boitier (1) est plaçable à l'extérieur du matériel poreux (49) à traiter,
- des moyens de chauffage (6) susceptibles d'être introduits dans le matériel poreux (49), lesdits moyens de chauffage comprennent plusieurs tubes de chauffage (46) ayant une paroi externe thermo-conductrice, lesdits tubes de chauffage (46) sont connectables au module de chauffage (6); et plusieurs tubes d'injection (41) de liquide sous pression connectables au module d'injection de liquide sous pression, lesdits tubes de chauffage (46) et d'injection (41) de liquide sont dépourvus de perforations,
- au moins un moyen d'extraction de vapeur pour extraire la vapeur de contaminants ledit moyen d'extraction est susceptibles d'être crée dans le matériel poreux (49) et est connectable au module de récupération, et
- au moins une couche de matériel étanche (42) applicable à la surface du matériel poreux (49) à traiter,
**caractérisé en ce que** les tubes de chauffage (46) et/ou les tubes d'injection (41) sont de longueur variable.

9. Système selon la revendication 8 dans lequel la paroi externe (90) du tube de chauffage (46) est recouverte par une deuxième paroi externe (91) possédant au moins une entrée (92) et au moins une sortie (93), la dite deuxième paroi externe (91) défini ainsi un espace externe (94) dans lequel de l'air frais est circulé.

10. Système selon la revendication 9 dans lequel la deuxième paroi du tube de chauffage (46) s'étale sur une distance « d » qui est proximale au boitier (1) et qui correspond à au moins la hauteur de la couche de matériel étanche (42).

11. Système selon au moins une des revendications 8-10 dans lequel les tubes de chauffage (46) et/ou les tubes d'injection (41) et/ou les tubes d'extraction sont introduits horizontalement et/ou verticalement et/ou obliquement dans le matériel poreux (49).

12. Utilisation du système tel que décrit dans au moins une des revendications 8-11 pour le traitement et/ou la décontamination des matériaux poreux (49) et/ou des nappes aquifères selon le procédé tel que décrit dans au moins une des revendications 1-7.

## Patentansprüche

1. Verfahren zur Behandlung und/oder Dekontaminierung von porösem Material aus Grundwasserleitern, umfassend die folgenden Schritte:
- Erzeugen von mindestens einem Heizschacht (60) im porösen Material (49) zum Erhitzen des porösen Materials (49), wobei der Heizschacht mindestens ein Heizrohr (46) und mindestens ein Einspritzrohr (41) für unter Druck stehende Flüssigkeit umfasst,
- Erzeugen von mindestens einem Absaugschacht (48) im porösen Material (49) zum Absaugen der Schadstoffdämpfe, wobei der Heizschacht (60) und/oder der Absaugschacht (48) durch Einführen eines Rohrs in das poröse Material (49) und/oder durch Ausheben eines Teils des porösen Materials erzeugt wird,
- Auftragen einer Schicht aus wasserdichtem Material (42) auf die Oberfläche des porösen Materials (49),
- Verbinden des Heizschachts (60) und des Absaugschachts (48) mit mindestens einem Gehäuse (1), das mindestens ein Heizmodul (6), ein Einspritzmodul für unter Druck stehende Flüssigkeit und ein Rückgewinnungsmodul umfasst, wobei das Gehäuse (1) außerhalb und in der Nähe des porösen Materials (49) platziert werden kann,
- Zuführen von Wärme durch das Heizmodul (6) in das Heizrohr (46), wodurch der Heizschacht (60) erwärmt wird,
- Einspritzen mindestens einer Flüssigkeit durch das Einspritzmodul in das Einspritzrohr (41), um die eingespritzte Flüssigkeit und die im porösen Material (49) im Heizschacht (60) vorhandenen Schadstoffe zu verdampfen und zu verdunsten, wodurch die Schadstoffe in Schadstoffdampf umgewandelt werden, und
- Absaugen des im behandelten porösen Material (49) erzeugten Schadstoffdampfes und/oder zumindest eines Teils der im porösen Material (49) vorhandenen Flüssigkeit durch das Absaugmodul über den Absaugschacht (48),
**dadurch gekennzeichnet, dass** die Temperatur des durch Verdunstung gewonnenen Dampfes und die Temperatur der eingespritzten Flüssigkeit mindestens 200°C beträgt.

2. Verfahren nach Anspruch 1, wobei der Schritt des Zuführens von Wärme in das Heizrohr (46) und/oder des Einspritzens von unter Druck stehender Flüssigkeit in das Einspritzrohr (41) und/oder des Absaugens von Schadstoffdampf kontinuierlich durchgeführt wird.

3. Verfahren nach mindestens einem der Ansprüche 1 bis 2, wobei der Schritt des Zuführens von Wärme in das Heizrohr (46) und/oder des Einspritzens von unter Druck stehender Flüssigkeit in das Einspritzrohr (41) und/oder des Absaugens von Schadstoffdampf diskontinuierlich durchgeführt wird.

4. Verfahren nach mindestens einem der Ansprüche 1 bis 3, wobei die in das Einspritzrohr (41) eingespritzte Flüssigkeit aus dem zu behandelnden porösen Material (49) stammen kann.

5. Verfahren nach mindestens einem der Ansprüche 1 bis 4, wobei der maximale Abstand zwischen dem Einspritzrohr für unter Druck stehende Flüssigkeit (41) und dem Heizrohr (46) 1,5 Meter beträgt.

6. Verfahren nach mindestens einem der Ansprüche 1 bis 5, wobei die aus dem porösen Material (49) abgesaugte Flüssigkeit wieder in das Einspritzrohr (41) eingespritzt wird.

7. Verfahren nach mindestens einem der Ansprüche 1 bis 6, wobei der aus dem porösen Material (49) abgesaugte Schadstoffdampf wieder in das Heizmodul (6) eingespritzt wird.

8. System zur Durchführung des Verfahrens nach mindestens einem der Ansprüche 1 bis 7, umfassend:
- mindestens ein Gehäuse (1), das mindestens ein Heizmodul (6), ein Einspritzmodul für unter Druck stehende Flüssigkeit und ein Rückgewinnungsmodul umfasst, wobei das Gehäuse (1) außerhalb des zu behandelnden porösen Materials (49) platziert werden kann,
- Heizmittel (6), die in das poröse Material (49) eingeführt werden können, wobei die Heizmittel mehrere Heizrohre (46) mit einer wärmeleitenden Außenwand umfassen, wobei die Heizrohre (46) mit dem Heizmodul (6) verbindbar sind; und mehrere -Einspritzrohre für unter Druck stehende Flüssigkeit (41), mit dem Einspritzmodul für unter Druck stehende Flüssigkeit verbindbar sind, wobei die Heiz-(46) und Flüssigkeits-Einspritzrohre (41) keine Perforationen aufweisen,
- mindestens ein Dampfabsaugmittel zum Absaugen von Schadstoffdampf, wobei das Absaugmittel im porösen Material (49) ausgebildet werden kann und mit dem Rückgewinnungsmodul verbindbar ist, und
- mindestens eine Schicht aus wasserdichtem Material (42), die auf die Oberfläche des zu behandelnden porösen Materials (49) aufgebracht werden kann,
**dadurch gekennzeichnet, dass** die Heizrohre (46) und/oder die Einspritzrohre (41) eine variable Länge aufweisen.

9. System nach Anspruch 8, wobei die Außenwand (90) des Heizrohrs (46) von einer zweiten Außenwand (91) bedeckt ist, die mindestens einen Einlass (92) und mindestens einen Auslass (93) aufweist, wobei die zweite Außenwand (91) somit einen Außenraum (94) definiert, in dem Frischluft zirkuliert.

10. System nach Anspruch 9, wobei sich die zweite Wand des Heizrohrs (46) über eine Distanz "d" erstreckt, die proximal zum Gehäuse (1) liegt und mindestens der Höhe der Schicht aus wasserdichtem Material (42) entspricht.

11. System nach mindestens einem der Ansprüche 8 bis 10, wobei die Heizrohre (46) und/oder die Einspritzrohre (41) und/oder die Absaugrohre horizontal und/oder vertikal und/oder schräg in das poröse Material (49) eingeführt werden.

12. Verwendung des Systems gemäß mindestens einem der Ansprüche 8 bis 11 zur Behandlung und/oder Dekontaminierung von porösem Material (49) und/oder Grundwasserleitern gemäß dem Verfahren gemäß mindestens einem der Ansprüche 1 bis 7.

## Claims

1. Method for the treatment and/or decontamination of porous materials from groundwater aquifers comprising the following steps:
- creating in the porous material (49) at least a heat well (60) for heating the porous material (49), said heat well comprising at least a heat tube (46) and at least a pressurized liquid injection tube (41),
- creating in said porous material (49) at least a extraction well (48) for extracting the vapor of contaminants, wherein the heat well (60) and/or the extraction well (48) is created by introducing a tube into the porous material (49) and/or by excavating a portion of the porous material,
- applying to the surface of the porous material (49) a layer of waterproof material (42),
- connecting the heat well (60) and the extraction well (48) to at least a housing (1) comprising at least a heat module (6), a pressurized liquid injection module, and a recovery module, said housing (1) being placeable outside and close to the porous material (49),
- supplying heat, by the heat module (6), into the heat tube (46) thereby heating the heat well (60),
- injecting, by the injection module, at least a liquid into the injection tube (41) to vaporize and evaporate the injected liquid and the contaminants present in the porous material (49) in said heat wells (60), thereby transforming the contaminants into contaminant vapor, and
- extracting, by the extraction module, the contaminant vapor generated in the treated porous material (49) and/or at least a portion of the liquid present in said porous material (49) through the extraction well (48),
**characterized in that** the temperature of the vapor obtained by evaporation and the temperature of the injected liquid is at least 200°C.

2. Method according to claim 1 wherein the step of providing heat into the heat tube (46) and/or injecting pressurized liquid into the injection tube (41) and/or extracting contaminant vapor is performed continuously.

3. Method according to at least one of claims 1-2 wherein the step of providing heat into the heat tube (46) and/or injecting pressurized liquid into the injection tube (41) and/or extracting contaminant vapor is performed discontinuously.

4. Method according to at least one of claims 1-3 wherein the liquid injected into the injection tube (41) can originate from the porous material (49) to be treated.

5. Method according to at least one of claims 1-4 wherein the maximum distance between the pressurized liquid injection tube (41) and the heat tube (46) is 1.5 meters.

6. Method according to at least one of claims 1-5 wherein the liquid extracted from the porous material (49) is reinjected into the injection tube (41).

7. Method according to at least one of claims 1-6 wherein the contaminant vapor extracted from the porous material (49) is reinjected into the heat module (6).

8. System for carrying out the method according to at least one of claims 1-7 comprising:
- at least a housing (1) comprising at least a heat module (6), a pressurized liquid injection module, and a recovery module, said housing (1) being placeable outside the porous material (49) to be treated,
- heating means (6) capable of being introduced into the porous material (49), said heating means comprise several heat tubes (46) having a heat-conducting external wall, said heat tubes (46) are connectable to the heat module (6); and several pressurized liquid injection tubes (41) connectable to the pressurized liquid injection module, said heat (46) and liquid injection tubes (41) are free of perforations,
- at least a vapor extraction means for extracting vapor from contaminants, said extraction means is capable of being created in the porous material (49) and is connectable to the recovery module, and
- at least a layer of waterproof material (42) applicable to the surface of the porous material (49) to be treated,
**characterized in that** the heat tubes (46) and/or the injection tubes (41) are of variable length.

9. System according to claim 8 wherein the external wall (90) of the heat tube (46) is covered by a second external wall (91) having at least an inlet (92) and at least an outlet (93), said second external wall (91) thereby defining an external space (94) into which fresh air is circulated.

10. System according to claim 9, wherein the second wall of the heat tube (46) extends over a distance "d" which is proximal to the housing (1) and which corresponds to at least the height of the layer of waterproof material (42).

11. System according to at least one of claims 8-10 wherein the heat tubes (46) and/or the injection tubes (41) and/or the extraction tubes are introduced horizontally and/or vertically, and/or obliquely into the porous material (49).

12. Use of the system as described in at least one of claims 8-11 for the treatment and/or decontamination of porous materials (49) and/or groundwater aquifers according to the method as described in at least one of claims 1-7.
